# EUROPÄISCHE PATENTANMELDUNG

(11) **EP 4 474 875 A1**
(43) Veröffentlichungstag der Anmeldung: **11.12.2024**
(21) Anmeldenummer: 23177632.9
(22) Anmeldetag: 06.06.2023
(51) Int. Cl.: G02B 6/38, G02B 6/32, G03B 37/00

(54) **STECKER UND STECKERSYSTEM FÜR EIN KANALINSPEKTIONS- UND/ODER WARTUNGSSYSTEM**

(71) Anmelder: iPEK International GmbH, 87477 Sulzberg (DE)
(72) Erfinder: Becherer, Andreas, 87448 Waltenhofen (DE); Kress, Michael, 87437 Kempten (DE); Endler, Hannes, 87439 Kempten (DE)
(74) Vertreter: 2s-ip Schramm Schneider Bertagnoll Patent- und Rechtsanwälte Part mbB

(57) **Zusammenfassung**

Bereit gestellt wird ein Stecker für ein Kanalinspektions- und/oder Wartungssystem zum operativen Koppeln eines im Stecker angeordneten ersten Lichtwellenleiters mit einem in einem Gegenstecker angeordneten zweiten Lichtwellenleiter, wobei
- der Stecker ein Steckergehäuse umfasst, in dem eine Aussparung zur Aufnahme eines Lichtwellenleitergehäuses ausgebildet ist,
- in dem Lichtwellenleitergehäuse der erste Lichtwellenleiter angeordnet ist, wobei der erste Lichtwellenleiter in dem Lichtwellenleitergehäuse fixiert ist.

## Beschreibung

### Gebiet der Erfindung

Die Erfindung betrifft einen Stecker für ein Kanalinspektions- und/oder Wartungssystem mit einem im Stecker angeordneten Lichtwellenleiter sowie ein Steckersystem bestehend aus zwei Steckern.

### Hintergrund der Erfindung

Bisher wurden Kanalinspektions- und Wartungssysteme mit Kupferübertragungsstrecken ausgeführt. Diesen weisen allerdings eine begrenzte Bandbreite auf, wodurch hochauflösende Videosignale nur noch mit sehr hohem Aufwand und nur komprimiert übertragen werden können. Zwischen dem Fahrwagen eines Kanalinspektions- und Wartungssystems und dem Kabel, das aus dem Kanal herausgeführt ist, befindet sich meist eine lösbare elektrische Schnittstelle. Diese Steckerschnittstellen sind für die Anwendungen in Rohr- und Kanalsystemen robust ausgeführt.

Aufgrund der immer größer werdenden benötigten Bandbreiten für eine Datenübertragung (beispielsweise für höher aufgelöste Bild- und/oder Videodaten), wird die Übertragungsstrecke zunehmend von Kupfer auf Glasfaser umgestellt. Die Anforderungen an die lösbare Verbindung zwischen Leitung und Fahrwagen sind weiterhin die gleichen. Glasfasersteckverbindungen mit direktem Kontakt der Fasern erfüllen diese Anforderungen nicht. Zusätzlich stellt eine solche Verbindung sehr hohe Anforderungen an die Fertigungstoleranzen (so muss der axiale und radiale Versatz im einstelligen µm-Bereich liegen). Mit normalen Fertigungstechniken sind Glasfasersteckverbindungen mit solchen Fertigungstoleranzen nicht praktikabel realisierbar. Zudem sind solche Glasfasersteckverbindungen sehr empfindlich gegenüber Verschmutzungen.

Um die vorstehenden zu den Glasfasersteckverbindungen genannten Probleme zu umgehen, kann die Glasfaserstrecke vor der Kupplung in eine Kupferübertragungsstrecke umgewandelt werden, sodass die Steckerschnittstelle selbst als elektrische Schnittstelle ausgeführt ist. Dieser Ansatz hat allerdings den Nachteil, dass zwischen der Glasfaserstrecke und der Steckerschnittstelle (meist im Steckergehäuse) eine entsprechende Elektronik platziert werden muss, was zu größer dimensionierten Steckergehäusen führt. Größere Steckergehäuse wiederum können den möglichen Einsatzbereich reduzieren, etwa wenn Schiebesysteme für Rohre mit kleinen Durchmessern verwendet werden sollen.

### Aufgabe der Erfindung

Aufgabe der vorliegenden Erfindung ist es daher, einen Lichtwellenleiterstecker für Kanalinspektions- und/oder Wartungssysteme bereitzustellen, der die vorstehend genannten Nachteile zumindest teilweise vermeidet, und eine verbesserte und sichere Kopplung eines Kabels mit einem Lichtwellenleiter zur Datenübertragung ermöglicht.

### Erfindungsgemäß Lösung

Gelöst wird diese Aufgabe mit einem Stecker und einem Steckersystem nach den unabhängigen Ansprüchen. Vorteilhafte Ausgestaltungen der Erfindung sind in den jeweiligen abhängigen Ansprüchen angegeben.

Bereitgestellt wird demnach ein Stecker für ein Kanalinspektions- und/oder Wartungssystem zum operativen Koppeln eines im Stecker angeordneten ersten Lichtwellenleiters mit einem in einem Gegenstecker angeordneten zweiten Lichtwellenleiters, wobei
- der Stecker ein Steckergehäuse umfasst, in dem eine Aussparung zur Aufnahme eines Lichtwellenleitergehäuses ausgebildet ist,
- in dem Lichtwellenleitergehäuse der erste Lichtwellenleiter angeordnet ist, wobei der erste Lichtwellenleiter in dem Lichtwellenleitergehäuse fixiert ist,
- der erste Lichtwellenleiter koppelseitig
   - eine Linse aufweist, über die Licht aus dem ersten Lichtwellenleiter auskoppelbar oder in den ersten Lichtwellenleiter einkoppelbar ist, oder
   - eine Kontaktfläche aufweist, die mit einer Kontaktfläche des im Gegenstecker angeordneten zweiten Lichtwellenleiters korrespondiert, und
- das Lichtwellenleitergehäuse in der Aussparung aufgenommen ist.

"Koppelseitig" bezeichnet hierbei jenes Ende bzw. jene Seite des Steckers, das bzw. die zum Koppeln des Steckers mit dem Gegenstecker dem Gegenstecker zugewandt ist, also das im Stecker angeordnete freie Ende des Lichtwellenleiters. Mit anderen Worten ist
- an dem im Stecker angeordneten freien Ende des ersten Lichtwellenleiters eine Linse angeordnet, über die Licht aus dem ersten Lichtwellenleiter auskoppelbar oder in den ersten Lichtwellenleiter einkoppelbar ist, oder
- das im Stecker angeordnete freie Ende des ersten Lichtwellenleiters als Kontaktfläche ausgestaltet, die mit einer Kontaktfläche des im Gegenstecker angeordneten zweiten Lichtwellenleiters korrespondiert, wobei über die Kontaktfläche die optische Signalübertragung abgewickelt wird.

Durch die Fixierung des ersten Lichtwellenleiters in dem Lichtwellenleitergehäuse kann der radiale Versatz des freien Endes ersten Lichtwellenleiters relativ zum freien Ende des zweiten Lichtwellenleiters des Gegensteckers minimiert bzw. optimiert werden, insbesondere dann, wenn das Steckergehäuse des Steckers mit dem Steckergehäuse des Gegensteckers in radialer Hinsicht formschlüssig koppelbar ist, der Stecker im gekoppelten Zustand also nicht radial relativ zum Gegenstecker bewegbar ist.

In einer Ausgestaltung der Erfindung kann das Lichtwellenleitergehäuse in der Aussparung axial verschiebbar sein. Damit kann der radiale Versatz des freien Endes ersten Lichtwellenleiters relativ zum freien Ende des zweiten Lichtwellenleiters des Gegensteckers minimiert bzw. optimiert werden. Zusammen mit der Fixierung des ersten Lichtwellenleiters in dem Lichtwellenleitergehäuse können so sowohl der axiale als auch der radiale Versatz des freien Endes ersten Lichtwellenleiters relativ zum freien Ende des zweiten Lichtwellenleiters des Gegensteckers minimiert bzw. optimiert werden. Die Steckerschnittstelle selbst muss nicht mehr als elektrische Schnittstelle ausgeführt werden. Im Unterscheid zu den sehr geringen Fertigungstoleranzen sind hier deutlich größer Toleranzen möglich, ohne die optische Signalübertragung zu beinträchtigen.

In der Aussparung kann ein auf das Lichtwellenleitergehäuse wirkendes Federelement angeordnet sein, mit dem das Lichtwellenleitergehäuse axial (in Richtung der Koppelseite) verschiebbar ist. Im gekoppelten Zustand des Steckers wird so gewährleistet, dass das freie Ende des ersten Lichtwellenleiters bzw. die daran angeordnete Linse einen vorbestimmten axialen Abstand zum zweiten Lichtwellenleiter des Gegensteckers nicht überschreitet, bzw. dieser Abstand in gekoppelt Zustand minimiert wird.

Vorteilhaft kann es sein, wenn das Lichtwellenleitergehäuse verdrehsicher in der Aussparung aufgenommen ist. Das gilt insbesondere dann, wenn die freien Enden des ersten und zweiten Lichtwellenleiters als Kontaktflächen ausgebildet sind, die nicht senkrecht zur Längsachse des Lichtwellenleiters (z.B. Lichtwellenleiter, deren Enden einen Schrägschliff aufweisen) stehen. Damit wird gewährleistet, dass sich im gekoppelten Zustand die Lage der sich gegenüberstehenden Kontaktflächen nicht ändert.

In einer Ausgestaltung der Erfindung kann in dem Steckergehäuse (optional) ein erster elektrischer Leiter angeordnet sein, der mit einem in dem Gegenstecker angeordneten zweiten elektrischer Leiter koppelbar ist, um darüber eine Versorgung mit elektrischer Energie abzuwickeln. Mit ein und demselben Stecker kann so sowohl die optische Datenübertragung als auch die Versorgung mit elektrischer Energie abgewickelt werden. Der erste elektrische Leiter kann zusätzlich oder alternativ auch für eine Datenübertragung verwendet werden (beispielsweise für Daten, die nur eine geringe Bandbreite benötigen).

Alternativ oder zusätzlich zu dem ersten elektrischen Leiter können in dem Steckergehäuse auch mechanische Schnittstellen vorgesehen sein, die mit entsprechenden mechanischen Schnittstellen in dem Gegenstecker korrespondieren bzw. mit diese gekoppelt werden können. Beispielsweise kann so eine Druckluftschnittstelle oder eine Fluidschnittstelle in ein und demselben Stecker bereitgestellt werden.

Der erste elektrische Leiter kann koppelseitig ein Koppelglied (z.B. einen Pin) aufweisen, das mit einem Koppelglied (z.B. eine Hülse) des zweiten elektrischen Leiters des Gegensteckers korrespondiert.

Vorteilhaft kann es sein, wenn der Stecker ausgebildet ist, relativ zum Gegenstecker verdrehsicher mit dem Gegenstecker verbunden zu werden, wobei das Steckergehäuse eine Verdrehsicherung aufweist, die mit einer Verdrehsicherung des Steckergehäuses des Gegensteckers korrespondiert. Dadurch wird einerseits gewährleistet, dass Stecker und Gegenstecker nur so gekoppelt werden können, dass die Lichtwellenleitergehäuse des Steckers und des Gegensteckers in axialer Hinsicht korrekt zueinander ausgerichtet sind. Zusammen mit der verdrehsicheren Anordnung des Lichtwellenleitergehäuses in der Aussparung des Steckergehäuses kann so eine sichere optische Datenübertragung gewährleistet werden. Auf aufwendige Schleifkontakte zu Übertragung elektrischer Energie, wie sie etwa bei relativ zueinander drehbaren Steckern realisiert werden muss, kann so zudem verzichtet werden.

In einer Ausgestaltung der Erfindung können in dem Steckergehäuse zumindest zwei Aussparungen zur Aufnahme jeweils eines Lichtwellenleitergehäuses ausgebildet sind, wobei die zumindest zwei Aussparungen versetzt zueinander angeordnet sind und wobei vorzugsweise zumindest eine der beiden Aussparungen bezogen auch das Steckergehäuse nicht koaxial angeordnet ist. Damit können mehrere voneinander unabhängige optische Übertragungsstrecken mit nur einem Stecker realisiert werden.

Vorteilhaft kann es sein, wenn das Steckergehäuse gas- und fluiddicht ausgestaltet ist.

In einer Ausgestaltung kann es vorgesehen sein, wenn das Steckergehäuse gas- und fluiddicht mit einem Steckergehäuse des Gegensteckers koppelbar ist. Damit wird vermieden, dass im Betriebe Schmutz oder Flüssigkeit in den Bereich der optischen Koppelstellen gelangt.

Gemäß einer Ausgestaltung der Erfindung kann die Linse eine Kugellinse sein, die zur Strahlenaufweitung angepasst ist. Andere Formen von Linsen, die eine geeignete Strahlenaufweitung ermöglichen, können im Sinne der vorliegenden Erfindung ebenfalls verwendet werden.

Bereit gestellt wird durch die Erfindung ferner ein Steckersystem mit einem erfindungsgemäßen Stecker und einem Gegenstecker, wobei der Gegenstecker gemäß dem erfindungsgemäßen Stecker ausgestaltet ist, wobei der Stecker, insbesondere das Steckergehäuse des Steckers, mit dem Gegenstecker, insbesondere dem Steckergehäuse des Gegensteckers, koppelbar ist, wobei die Lichtwellenleitergehäuse des Steckers und des Gegensteckers so in dem jeweiligen Steckergehäuse angeordnet sind, dass im gekoppelten Zustand von Stecker und Gegenstecker die Linsen der Lichtwellenleiter oder die Kontaktflächen der Lichtwellenleiter derart relativ zueinander angeordnet sind, dass über ihnen eine optische Datenübertragung abwickelbar ist.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: einen Stecker und einen dazugehörigen Gegenstecker eines erfindungsgemäßen Steckersystems in einer perspektivischen Ansicht;
- Fig. 2: eine Schnittansicht (entlang der Längsachse) eines erfindungsgemäßen Steckersystems mit Lichtwellenleitergehäusen, die nicht federnd gelagert sind;
- Fig. 3: eine Schnittansicht (entlang der Längsachse) eines erfindungsgemäßen Steckersystems mit Lichtwellenleitergehäusen, die federnd gelagert sind;
- Fig. 4: zeigt ein Lichtwellenleitergehäuse eines erfindungsgemäßen Steckers in einer perspektivischen Ansicht (Abbildung (a)) und in einer Schnittansicht entlang der Längsachse (Abbildung (b)), und eine vergrößerte Ansicht des koppelseitigen Endes des Lichtwellenleitergehäuses (Abbildung (c));
- Fig. 5: ein Beispiel einer konkreten Verwendung eines erfindungsgemäßen Steckersystems an einem Schiebeaal eines Kanalinspektionssystems; und
- Fig. 6: ein weiteres Beispiel einer konkreten Verwendung eines erfindungsgemäßen Steckersystems an einem Fahrwagen eines Kanalinspektionssystems.

### Detaillierte Beschreibung der Erfindung

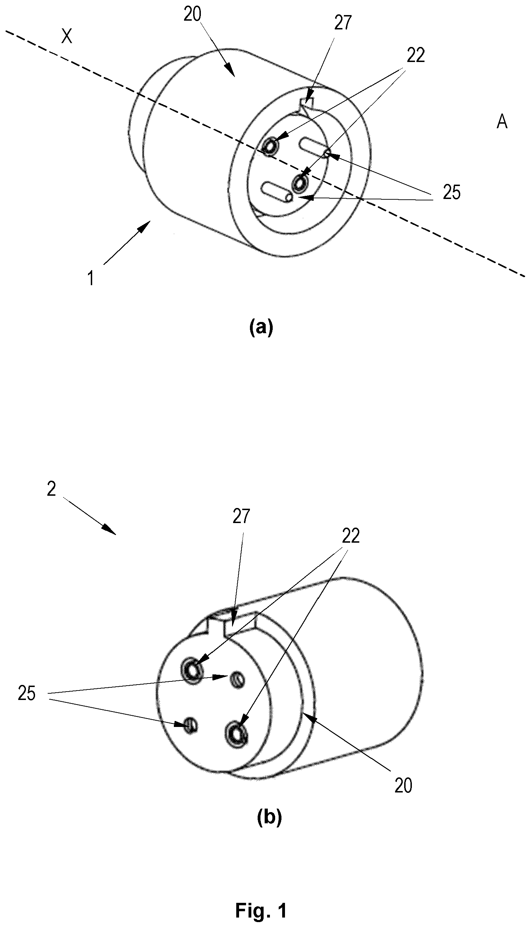

**Fig. 1** zeigt einen Stecker (Abbildung (a)) und einen dazugehörigen Gegenstecker (Abbildung (b)) eines erfindungsgemäßen Steckersystems in einer perspektivischen Ansicht.

Der Stecker 1 und der Gegenstecker 2 sind im Wesentlich so ausgestaltet, dass sie miteinander koppelbar sind, und zwar derart, dass zwischen ihnen eine optische Datenübertragung und, je nach weiterer Ausgestaltung, auch eine Übertragung elektrischer Energie abgewickelt werden kann. In einer Ausgestaltung der Erfindung sind der Stecker 1 und der Gegenstecker 2 lösbar koppelbar.

Der Stecker 1 und der Gegenstecker 2 weisen jeweils ein Steckergehäuse 20 auf, in dem ein Lichtwellenleitergehäuse 22 angeordnet ist. In Fig. 1 ist das koppelseitige Ende der Lichtwellenleitergehäuse 22 zu sehen ist. Das koppelseitige Ende ist in Fig. 1 mit dem Bezugszeichen "A" versehen.

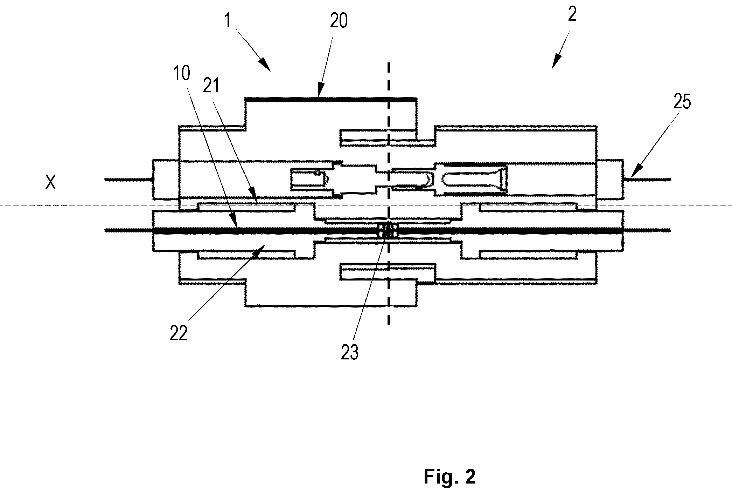

Das Lichtwellenleitergehäuse 22 kann fest in dem Steckergehäuse 20 angeordnet sein. Alternativ kann es vorgesehen sein, das Lichtwellenleitergehäuse 22 in einer dafür vorgesehenen Aussparung in dem Steckergehäuse anzuordnen, wobei diese Aussparung und das Lichtwellenleitergehäuse so ausgebildet sind, dass das Lichtwellenleitergehäuse in der Aussparung in axial Richtung (entlang der Achse X) bewegbar ist (wie etwa in Abbildung (b) der Fig. 2 gezeigt).

In dem Lichtwellenleitergehäuse 22 ist ein Lichtwellenleiter 10 angeordnet, dessen freies Ende sich an dem koppelseitigen Ende A des Lichtwellenleitergehäuses 22 befindet. Das Lichtwellenleitergehäuse 22 wird mit Bezug auf Fig. 2 näher beschrieben.

Die Steckergehäuse 20 können so ausgestaltet sein, dass sie weitgehend fluid- und/oder gasdicht miteinander gekoppelt werden können. Damit wird verhindert, dass im gekoppelten Zustand im Betrieb Schmutz oder Flüssigkeiten zwischen den Stecker 1 und den Gegenstecker 2 gelangt, was die Funktion, insbesondere die optische Datenübertragung beeinflussen kann. Hierzu kann es vorgesehen sein, an dem koppelseitigen Ende A des Steckers 1 und/oder des Gegensteckers 2 eine (in Fig. 1 nicht gezeigte) radial umlaufende Dichtung vorzusehen.

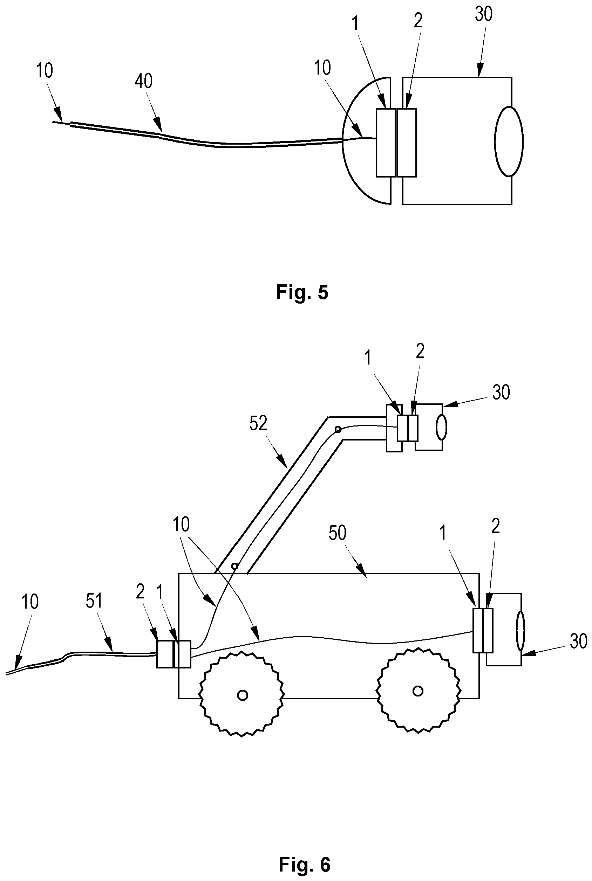

Das erfindungsgemäße Steckersystem, bestehend aus einem Stecker 1 und einem Gegenstecker 2, kann ein Arretiermittel aufweisen, mit dem der Stecker 1 an dem Gegenstecker 2 arretiert werden kann, um ein unbeabsichtigtes Lösen des Steckers 1 vom Gegenstecker 2 zu verhindern. Insbesondere im Bereich der Kanalinspektion und/oder Wartung können (axialen) Zugkräfte auf das Steckersystem wirken, die ohne entsprechende Arretierung zu einem Lösen des Steckers vom Gegenstecker führen können. Erfindungsgemäß können beispielsweise der Stecker 1 an einem Kamerasystem und der Gegenstecker 2 an einem freien Ende eines Schiebeaals angeordnet sein (wie etwa in Fig. 5 gezeigt) - beim Hausziehen des Schiebeaals aus dem Kanal kann sich ohne entsprechende Arretierung die Kamera von dem Schiebeaal lösen, etwa wenn sich die Kamera im Kanal verhakt. Vorteilhafterweise kann die Arretierung so ausgestaltet sein, dass beim Koppeln der beiden Stecker diese automatisch arretiert werden, beim Lösen der Stecker die Arretierung aber manuell gelöst werden muss.

Bei der in Fig. 1 gezeigten Ausgestaltung des erfindungsgemäßen Steckersystems sind in dem Gehäuse 20 neben den Lichtwellenleitergehäuse 22 auch elektrische Leiter 25 angeordnet, wobei der erste elektrische Leiter 25.1 des Steckers 1 mit dem zweiten elektrischen Leiter 25.2 des Gegensteckers 2 operativ koppelbar ist. Die elektrischen Leiter können zur Abwicklung der Stromversorgung vorgesehen sein. Alternativ oder zusätzlich können die elektrischen Leiter auch zur Datenübertragung verwendet werden. So kann es beispielsweise vorteilhaft sein, eine eine hohe Bandbreite erforderliche Videodatenübertragung über die Lichtwellenleiter und eine Übertragung einfacher Sensordaten über die elektrischen Leiter abzuwickeln. Das Koppeln der beiden elektrischen Leiter 25.1, 25.2 kann über an sich bekannte Koppelsysteme erfolgen, etwa mittels eines Pins und einer entsprechend angepassten Hülse, wie in Fig. 1 zu gezeigt. Die Koppelung der elektrischen Leiter ist vorteilhafterweise so ausgeführt, dass sie den Anforderungen an den Explosionsschutz genügen.

Alternativ kann die Kopplung der beiden elektrischen Leiter 25.1, 25.2 je nach Anforderung auch kapazitiv oder induktiv erfolgen.

Zusätzlich oder alternativ zu den elektrischen Leitern 25.1, 25.2 können auch mechanische Schnittstellen vorgesehen sein, die es beispielsweise ermöglichen Druckluft oder Flüssigkeiten von einem Stecker 1 zum anderen Stecker 2 zu übertragen.

In Fig. 1 ist ein Steckersystem gezeigt, bei dem jeder Stecker zwei Lichtwellenleitergehäuse aufweist, sodass zwei optische Übertragungsstrecken vorgesehen werden können. Erfindungsgemäß es aber auch möglich, in jedem Stecker nur ein Lichtwellenleitergehäuse vorzusehen - in diesem Fall kann das Lichtwellenleitergehäuse jeweils konzentrisch, d.h. in der Längsachse X in dem Steckergehäuse angeordnet werden. Es können aber jeweils auch mehr als zwei Lichtwellenleitergehäuse vorgesehen sein.

Die Anzahl der Lichtwellenleitergehäuse in den beiden Steckern und damit die Anzahl der Lichtwellenleiter müssen nicht identisch sein. So kann beispielsweise ein Stecker zwei Lichtwellenleitergehäuse und der andere Stecker nur ein Lichtwellenleitergehäuse aufweisen. Beim Koppeln der beiden Stecker können die beiden miteinander korrespondierenden Lichtwellenleiter operativ verwendet werden, während der zweiten Lichtwellenleiter des einen Steckers "tot" ist. Damit kann beispielsweise an einem Fahrwagen (wie in Fig. 5 gezeigt) ein Universalstecker vorgesehen sein, der eine Vielzahl von Lichtwellenleitergehäusen und damit eine Vielzahl von Lichtwellenleitern aufweist, an dem Stecker angekoppelt werden können, die auch weniger Lichtwellenleiter aufweisen. Beispielsweise können so an dem Fahrwagen unterschiedliche Kamerasysteme angekoppelt werden, die unterschiedlich viele Videosignale bereitstellen und die jeweils über getrennte optische Übertragungsstrecken übertragen werden sollen.

Die Steckergehäuse 20 können derart ausgeführt sein, dass sie im gekoppelten zustand vor einem Drehen (um die Längsachse X) relativ zueinander gesichert sind. Hierzu können an den Steckergehäusen 20 entsprechende Verdrehsicherungen 27 vorgesehen sein. Eine Art der Verdrehsicherung, wie in Fig. 1 gezeigt, besteht aus einer am einen Steckergehäuse hervorstehenden Nase, die in eine am anderen Steckergehäuse korrespondierende Aussparung eingreift. Die Verdrehsicherung ist vorteilhafterweise derart ausgestaltet, dass die beiden Stecker nur in einer Relativposition zueinander miteinander gekoppelt werden können. Damit wir einerseits ein Verdrehen relativ zueinander verhindert. Andererseits wird dadurch ein falsches Koppeln der beiden Stecker vermieden, was insbesondere dann wichtig ist, wenn mehrere Lichtwellenleitergehäuse in den Steckergehäusen angeordnet sind oder wenn bei nur einem Lichtwellenleitergehäuse in den Steckergehäusen dieses nicht konzentrisch angeordnet ist. Bei nur einem konzentrisch angeordneten Lichtwellenleitergehäuse und elektrischen Leitern, die beim Koppeln ineinandergreifen, kann gegebenenfalls auf eine Verdrehsicherung verzichtet werden.

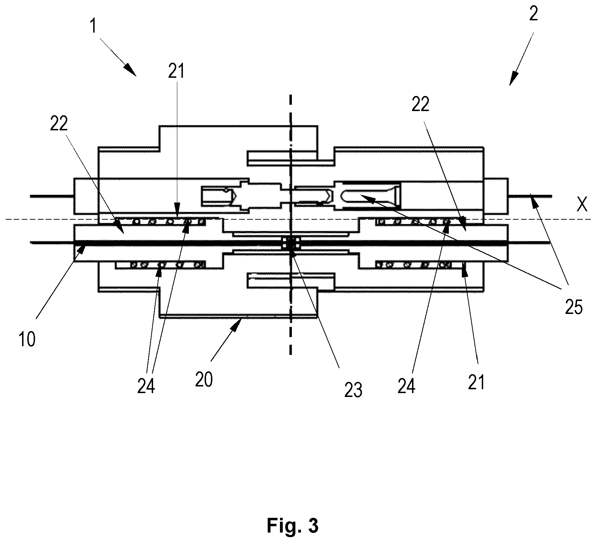

**Fig. 2** **und** **Fig. 3** zeigen jeweils Schnittansichten (parallel zur Längsachse X) von zwei erfindungsgemäßen Steckersystemen mit Lichtwellenleitergehäusen, wobei in Fig. 2 die Lichtwellenleitergehäuse nicht federnd und in Fig. 3 federnd gelagert sind.

Erkennbar sind hier die Aussparungen 21 in den Steckergehäusen 20, in denen die Lichtwellenleitergehäuse 22 angeordnet sind.

Bei der nicht federnd gelagerten Ausführung (wie in Fig. 2 gezeigt) kann es vorgesehen sein, das Lichtwellenleitergehäuse 22 fest, d.h. nicht bewegbar, in der Aussparung anzuordnen. Das ist allerdings nur optional.

Gemäß der in Fig. 3 gezeigten Ausführung ist das Lichtwellenleitergehäuse 22 federn in der Aussparung 21 gelagert, wobei hier eine Druckfeder in der Aussparung 21 angeordnet ist. Das Lichtwellenleitergehäuse 22 ist in axialer Richtung beweglich in der Aussparung 21 angeordnet. Die Druckfeder ist so relativ zum Lichtwellenleitergehäuse 22 angeordnet, dass sie das Lichtwellenleitergehäuse 22 mit einer Federkraft beaufschlagen kann, die bewirkt, dass das Lichtwellenleitergehäuse in der Aussparung 21 in Richtung des koppelseitigen Endes A des Steckers gedrückt wird. Die Feder ist so dimensioniert, dass sie ab einer gewissen Kraft, die entgegen der Federkraft der Feder wirkt, nachgibt, sodass das Lichtwellenleitergehäuse in der Aussparung 21 in die entgegengesetzte Richtung (entgegen der Federkraft) bewegt wird.

Das Vorsehen einer Druckfeder hat zwei wesentliche Vorteile:
Erstens kann so gewährleistet werden, dass die Lichtwellenleitergehäuse 22 bei miteinander gekoppelten Steckern einen bestimmten axialen Minimalabstand nicht überschreiten, was sich positiv auf die optische Datenübertragung auswirkt, wenn an den freien Enden der Lichtwellenleiters Linsen 23 vorgesehen sind.

Zweitens kann bei Lichtwellenleitern, deren freien Enden als Kontaktflächen für die optische Signalübertragung ausgestaltet sind, gewährleistet werden, dass sich die Kontaktflächen unabhängig von eventuellen Fertigungstoleranzen der Steckergehäuse berühren, ohne dass die Kontaktflächen beschädigt werden.

In Fig. 3 sind Spiraldruckfedern gezeigt. Erfindungsgemäß können auch andere hierfür geeignete Federsysteme vorgesehen sein.

Gezeigt sind in Fig. 2 und Fig. 3 auch die beiden in Fig. 1 gezeigten elektrischen Leiter 25.

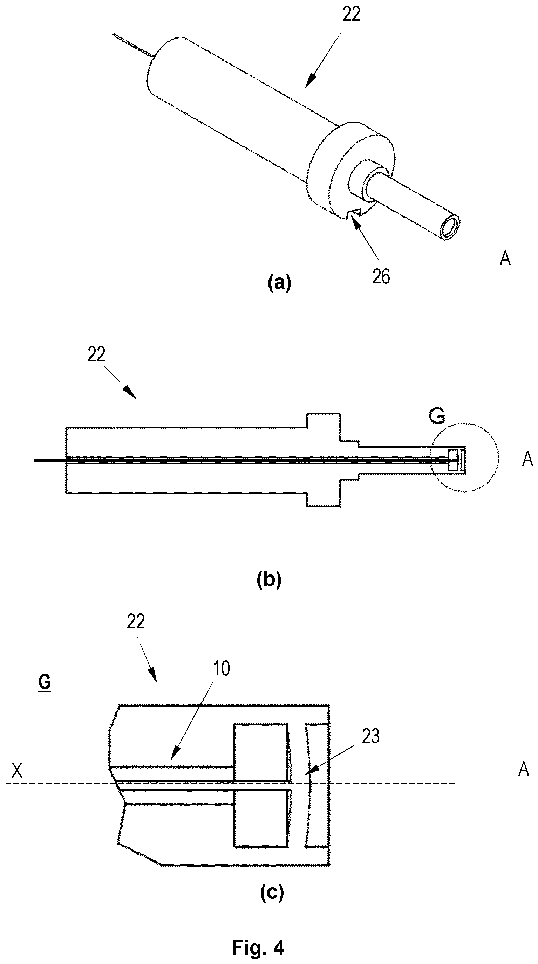

**Fig. 4** zeigt ein Lichtwellenleitergehäuse 22 eines erfindungsgemäßen Steckers in einer perspektivischen Ansicht (Abbildung (a)) und in einer Schnittansicht entlang der Längsachse (Abbildung (b)), und eine vergrößerte Ansicht des koppelseitigen Endes des Lichtwellenleitergehäuses (Abbildung (c)).

In dem Lichtwellenleitergehäuse 22 ist ein Lichtwellenleiter 10 fest angeordnet, der rückseitig in das Lichtwellenleitergehäuse geführt wird. Das freie Ende des Lichtwellenleiters 10 befindet sich am koppelseitigen Ende A.

Bei der in Fig. 4 gezeigten Ausgestaltung ist an dem koppelseitigen Ende A des Lichtwellenleitergehäuses 22 eine Linse 23 angeordnet, die operativ mit dem freien Ende des Lichtwellenleiters 10 gekoppelt ist. Die Linse ist so gewählt, dass sie eine geeignete Strahlenaufweitung aufweist, um Licht aus dem Lichtwellenleiter auszukoppeln bzw. Licht in den Lichtwellenleiter einzukoppeln.

Anstelle einer Linse 23 kann das freie Ende des Lichtwellenleiters auch als Kontaktfläche ausgestaltet sein. Hierbei kann beispielsweise ein Schrägschliff vorgesehen sein. Die Kontaktfläche ist so ausgestaltet, dass sie mit der Kontaktfläche des anderen Lichtwellenleiters korrespondiert. "Korrespondieren" bedeutet in diesem Zusammenhang, dass die Kontaktflächen von zwei gekoppelten Lichtwellenleitern so ausgestaltet und relativ zueinander angeordnet sind, dass über sie eine optische Datenübertragung abgewickelt werden kann.

Das Lichtwellenleitergehäuse 22 kann eine optionale Verdrehsicherung 26 aufweisen, etwa eine Aussparung (oder Vorsprung), die mit einem in der Aussparung 21 des Steckergehäuses 20 angeordneten Vorsprung (oder Aussparung) korrespondiert. Die Verdrehsicherung verhindert, dass sich das Lichtwellenleitergehäuse 22 in der Aussparung 21 des Steckergehäuses 20 dreht. Das insbesondere dann vorteilhaft, wenn das freie Ende des Lichtwellenleiters als Kontaktfläche ausgestaltet ist, bei der eine Drehung der Kontaktfläche (um die Längsachse X) zu einer Störung der optischen Datenübertragung oder gar zu einer Beschädigung des Lichtwellenleiters führen kann.

Fig. 5 zeigt ein Beispiel einer konkreten Verwendung eines erfindungsgemäßen Steckersystems an einem Schiebeaal eines Kanalinspektionssystems.

An dem vorderen Ende eines Schiebeaals 40, das in einen Kanal oder ein Rohr verbracht wird, ist ein Kamerasystem 30 angeordnet. Erfindungsgemäß ist das Kamerasystem 30 über ein erfindungsgemäßes Steckersystem mit dem vorderen Ende des Schiebeaals gekoppelt. Hierzu sind an dem vorderen Ende des Schiebeaals ein erfindungsgemäßer Stecker 1 und an dem Kamerasystem ein erfindungsgemäßer Gegenstecker 2 angeordnet.

Über die Seele des Schiebaals kann der Lichtwellenleiter bis zum Stecker 1 geführt werden.

**Fig. 6** zeigt ein weiteres Beispiel einer konkreten Verwendung eines erfindungsgemäßen Steckersystems an einem Fahrwagen eines Kanalinspektionssystems.

Der Fahrwagen 50, der in einem Kanal verbracht wird, weist hier an dem vorderen Ende ein Kamerasystem 30 auf, das über ein erfindungsgemäßes Steckersystem mit dem Fahrwagen gekoppelt ist, wobei an dem Fahrwagen ein erfindungsgemäßer Stecker 1 und an dem Kamerasystem 30 ein erfindungsgemäßer Gegenstecker 2 angeordnet sind.

Der Fahrwagen weist hier einen Hebesystem 52 auf, an dessen freien Ende ein weiteres Kamerasystem 30 angeordnet ist, das über ein erfindungsgemäßes Steckersystem mit dem Hebesystem 52 gekoppelt ist, wobei an dem Hebesystem ein erfindungsgemäßer Stecker 1 und an dem Kamerasystem 30 ein erfindungsgemäßer Gegenstecker 2 angeordnet sind.

An der Rückseite des Fahrwagens 50 ist ein Kabel 51 befestigt, das aus dem Kanal herausgeführt ist und für eine optische Datenübertragung vorgesehen ist. Zusätzlich kann das Kabel 51 auch für eine Energieversorgung vorgesehen sein. Das Kabel 51 ist über ein erfindungsgemäßes Steckersystem mit dem Fahrwagen 50 gekoppelt ist, wobei an dem Fahrwagen ein erfindungsgemäßer Stecker 1 und an dem Kabel 51 ein erfindungsgemäßer Gegenstecker 2 angeordnet sind.

Über Lichtwellenleiter 10 ist der an der Rückseite des Fahrwagens angeordnete Stecker einerseits mit dem Stecker am Hebesystem und anderseits mit dem Stecker an der Vorderseite des Fahrwagens verbunden. Bei dem in Fig. 5 gezeigten Anwendungsbeispiel kann es vorteilhaft sein, bei dem an der Rückseite des Fahrwagens angeordneten Steckersystem zwei Lichtwellenleitergehäuse vorzusehen, wobei der Lichtwellenleiter des einen Lichtwellenleitergehäuses mit dem Stecker am Hebesystem und der Lichtwellenleiter des anderen Lichtwellenleitergehäuses mit dem Stecker an der Vorderseite des Fahrwagens verbunden ist. Entsprechend können im Kabel 51 zwei Lichtwellenleiter vorgesehen sein, sodass über den einen Lichtwellenleiter Videosignale der Kamera am Hebesystem und über den anderen Lichtwellenleiter Videosignale der Kamera an der Vorderseite des Fahrwagens optisch übertragen werden können. Die Stecker an dem Heber und an der Vorderseite des Fahrwagens müssen demnach jeweils nur ein Lichtwellenleitergehäuse aufweisen.

Mit erfindungsgemäßen Steckersystem ist es auch möglich Daten bidirektional über die Lichtwellenleiter zu übertragen.

Das erfindungsgemäße Steckersystem kann äußerst robust hergestellt werden. Gleichzeitig können die Anforderungen an die Fertigungstoleranzen reduziert werden, ohne dass sich das negativ auf die optische Übertragung auswirkt, was durch die Verdrehsicherungen und die federnde Lagerung der Lichtwellenleitergehäuse in den Steckergehäusen erreicht wird.

### Bezugszeichen:

- A: Koppelseite bzw. koppelseitig
- X: Achse
- 1: Stecker
- 2: Gegenstecker
- 10: Lichtwellenleiter
- 10.1: erster Lichtwellenleiter
- 10.2: zweiter Lichtwellenleiter
- 20: Steckergehäuse
- 21: Aussparung im Steckergehäuse 20
- 22: Lichtwellenleitergehäuse in der Aussparung 21
- 23: Linse am koppelseitigen Ende des Lichtwellenleiters 10.1, 10.2
- 24: Federelement in der Aussparung 21
- 25: elektrische Leiter
- 25.1: erster elektrischer Leiter
- 25.2: zweiter elektrischer Leiter
- 26: Verdrehsicherung am Lichtwellenleitergehäuse 22
- 27: Verdrehsicherung am Steckergehäuse 20
- 30: Kamerasystem
- 40: Schiebeaal
- 50: Fahrwagen
- 51: Kabel
- 52: Hebesystem

## Patentansprüche

1. Stecker (1) für ein Kanalinspektions- und/oder Wartungssystem zum operativen Koppeln eines im Stecker angeordneten ersten Lichtwellenleiters (10.1) mit einem in einem Gegenstecker (2) angeordneten zweiten Lichtwellenleiter (10.2), wobei
- der Stecker (1) ein Steckergehäuse (20) umfasst, in dem eine Aussparung (21) zur Aufnahme eines Lichtwellenleitergehäuses (22) ausgebildet ist,
- in dem Lichtwellenleitergehäuse (22) der erste Lichtwellenleiter (10.1) angeordnet ist, wobei der erste Lichtwellenleiter (10.1) in dem Lichtwellenleitergehäuse (22) fixiert ist,
- der erste Lichtwellenleiter (10.1) koppelseitig
- eine Linse (23) aufweist, über die Licht
- aus dem ersten Lichtwellenleiter (10.1) auskoppelbar oder
- in den ersten Lichtwellenleiter (10.1) einkoppelbar ist, oder
- eine Kontaktfläche aufweist, die mit einer Kontaktfläche des im Gegenstecker (2) angeordneten zweiten Lichtwellenleiters (10.2) korrespondiert, und
- das Lichtwellenleitergehäuse (22) in der Aussparung (21) aufgenommen ist.

2. Stecker nach Anspruch 1, wobei das Lichtwellenleitergehäuse (22) in der Aussparung (21) axial verschiebbar ist.

3. Stecker nach Anspruch 2, wobei in der Aussparung (21) ein auf das Lichtwellenleitergehäuse (22) wirkendes Federelement (24) angeordnet ist, mit dem das Lichtwellenleitergehäuse (22) axial verschiebbar ist.

4. Stecker nach Anspruch 1, wobei das Lichtwellenleitergehäuse (22) verdrehsicher in der Aussparung (21) aufgenommen ist.

5. Stecker nach Anspruch 1, wobei in dem Steckergehäuse (20) ein erster elektrischer Leiter (25.1) angeordnet ist, der mit einem in dem Gegenstecker (2) angeordneten zweiten elektrischer Leiter (25.2) koppelbar ist, um darüber eine Versorgung mit elektrischer Energie abzuwickeln.

6. Stecker nach dem vorhergehenden Anspruch, wobei der erste elektrische Leiter (25.1) koppelseitig ein Koppelglied aufweist, das mit einem Koppelglied des zweiten elektrischen Leiters (25.2) korrespondiert.

7. Stecker nach Anspruch 1, wobei der Stecker ausgebildet ist, relativ zum Gegenstecker (2) verdrehsicher mit dem Gegenstecker verbunden zu werden, wobei das Steckergehäuse (20) eine Verdrehsicherung (27) aufweist, die mit einer Verdrehsicherung des Steckergehäuses des Gegensteckers (2) korrespondiert.

8. Stecker nach Anspruch 1, wobei in dem Steckergehäuse (20) zumindest zwei Aussparungen (21) zur Aufnahme jeweils eines Lichtwellenleitergehäuses (22) ausgebildet sind, wobei die zumindest zwei Aussparungen (21) nicht-koaxial und versetzt zueinander angeordnet sind.

9. Stecker nach Anspruch 1, wobei das Steckergehäuse (20) gas- und fluiddicht ausgestaltet ist.

10. Stecker nach Anspruch 1, wobei das Steckergehäuse (20) gas- und fluiddicht mit einem Steckergehäuse des Gegensteckers (2) koppelbar ist.

11. Steckersystem mit einem Stecker (1) gemäß einem der vorhergehenden Ansprüche und einem Gegenstecker (2), wobei der Gegenstecker gemäß einem der vorhergehenden Ansprüche ausgestaltet ist, wobei das Steckergehäuse des Steckers mit dem Steckergehäuse des Gegensteckers koppelbar ist, wobei die Lichtwellenleitergehäuse des Steckers und des Gegensteckers so in dem jeweiligen Steckergehäuse angeordnet sind, dass im gekoppelten Zustand von Stecker und Gegenstecker die Linsen der Lichtwellenleiter oder die Kontaktflächen der Lichtwellenleiter derart relativ zueinander angeordnet sind, dass über ihnen eine optische Datenübertragung abwickelbar ist.
